# EUROPEAN PATENT APPLICATION

(11) **EP 4 585 488 A1**
(43) Date of publication of application: **16.07.2025**
(21) Application number: 23907458.6
(22) Date of filing: 24.11.2023
(51) Int. Cl.: B61B 13/10, F16L 23/04, F16L 23/16, F16L 23/18

(54) **TUBE CONNECTING STRUCTURE AND CONNECTION METHOD THEREOF**

(30) Priority: 20.12.2022 KR 20220179056
(71) Applicant: POSCO Co., Ltd, Pohang-si, Gyeongsangbuk-do 37859 (KR)
(72) Inventor: CHO, Wooyeon, Incheon 22003 (KR)
(74) Representative: Meissner Bolte Partnerschaft mbB
(86) International application number: PCT/KR2023/019108
(87) International publication number: WO 2024/136172

(57) **Abstract**

Disclosed herein is a tube connecting structure and a connection method thereof. According to an aspect of the disclosure, in a tube connecting structure for transporting a vehicle through an internal space at a pressure lower than atmospheric pressure, the tube connecting structure may include: a plurality of tubes, each of which is provided with flanges having an extended diameter at each end; a fastening member arranged to surround an outer circumferential surface of the flanges adjacent to each other; and a sealing member provided between the flanges adjacent to each other to seal a gap between the plurality of tubes adjacent to each other, wherein the sealing member is in close contact with the two flanges in an inward direction of the tube.

## Description

### [Technical Field]

The present disclosure relates to a tube connecting structure and a connection method thereof, and more particularly, to a tube connecting structure for a transportation system and a connection method thereof.

### [Background Art]

In general, two types of drag depending on speed require to be addressed in an ultrahigh-speed train system operating above 300 km/h. One is the aerodynamic design of a vehicle to reduce the exponentially increasing air resistance, and the other is the introduction of a magnetic levitation system to reduce friction between the vehicle and the track.

Since the Hyperloop alpha concept in 2012 , which introduced an ultrahigh-speed vacuum tube (hyperloop) in which a low pressure of approximately 0.001 atm at stratospheric levels 50 km above ground is introduced into a sealed tube, various attempts have been made to implement the system.

An electromagnetic or mechanical levitation and propulsion system is important in these attempts. Also, the implementation of a tube structure to maintain the 0.001 atm of sub-vacuum is critical in the infrastructure that accounts for more than 50% of the initial investment cost.

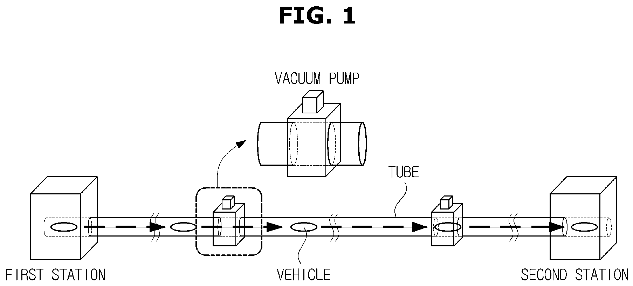

FIG. 1 is a diagram illustrating a general transportation system.

Referring to FIG. 1, a transportation system is a technology that connects a plurality of tubes between two stations and uses a vacuum pump to reduce an air pressure in the tubes to a sub-vacuum (e.g., 0.001 atm or less) to minimize air resistance (drag) and transport a vehicle at very high speeds. At present, it is known that speeds of up to approximately 1,200 km/h may be implemented. Thus, in the transportation system, forming and maintaining a vacuum state inside the tube is critical, and when the vacuum state is broken at any part of the tube, the vacuum state in the entire connected spaces of the tubes may be rapidly broken. Accordingly, building an airtight structure to physically isolate the inside and outside of the tube is crucial.

In order to maintain the airtightness of the inside of the tube, a flange connecting structure is used to connect and fasten the tubes. As is known, a flange refers to a pipe connection fitting used to securely fasten two pipes or tubes together, and is widely used across industries.

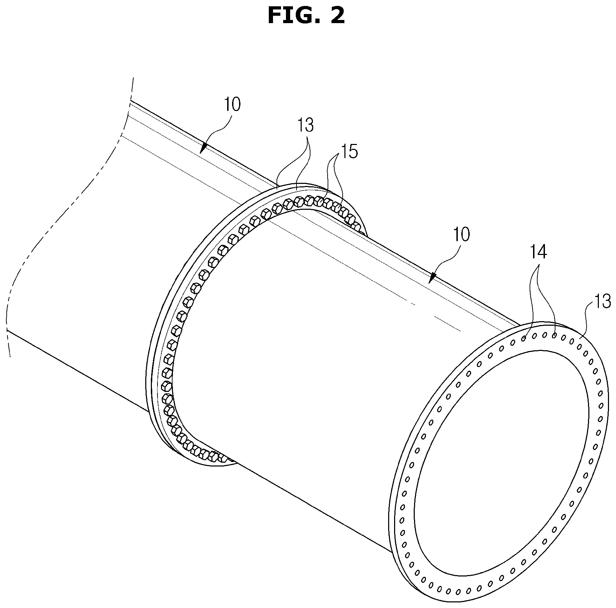

In a general flange connecting structure, as shown in FIG. 2, a flange 13 having a diameter larger than that of a tube 10 and another flange 13 formed on an adjacent tube 10 are brought into contact with each other, and fastening holes 14 formed around a circumference are connected with each other, and then fastened with bolts 15 and nuts (not shown) to secure the two tubes 10 to each other.

However, the above-described flange connecting structure requires machining many fastening holes 14 and fastening the fastening holes 14 with the corresponding bolts 15 and nuts, which increases a manufacturing cost, construction cost, and construction time.

In addition, despite the importance of fast disassembly and reassembly for maintenance, when the tube 10 needs to be replaced, the entire transportation system is out of operation, and the fastening structure of the numerous bolts 15 and nuts leads to long disassembly and reassembly times.

### [Disclosure]

### [Technical Problem]

An aspect of the disclosure is to provide a tube connecting structure and a connection method thereof that enable easy connection and maintenance of tubes.

Another aspect of the disclosure is to provide a tube connecting structure and a connection method thereof that reliably maintain a low pressure state inside a tube.

Still another aspect of the disclosure is to provide a tube connecting structure and a connection method thereof that appropriately resist tensile and bending stresses generated at a tube connecting portion.

### [Technical Solution]

According to an aspect of the present disclosure, in a tube connecting structure for transporting a vehicle through an internal space at a pressure lower than atmospheric pressure the tube connecting structure may include: a plurality of tubes, each of which is provided with flanges having an extended diameter at each end; a fastening member arranged to surround an outer circumferential surface of the flanges adjacent to each other; and a sealing member provided between the flanges adjacent to each other to seal a gap between the plurality of tubes adjacent to each other, wherein the sealing member is in close contact with the two flanges in an inward direction of the tube.

The sealing member may be compressed and deformed by itself by a pressure difference between an outside and an inside of the tube.

Each of the flanges may be tapered outwardly in a radial direction, and may include a first inclined surface inclined forwardly toward the adjacent tube, and a second inclined surface inclined rearwardly in an opposite direction to the first inclined surface.

The sealing member may be provided in a V-shaped groove formed between two first inclined surfaces facing each other.

The fastening member may be provided as a clamp that is divided into at least two pieces and joined together, and the fastening member may include: a body portion provided outside of the flanges adjacent to each other; a support portion extending from both sides of the body portion and contacting a rear portion of the flange; and a reinforcement portion protruding from the support portion and inclined so as to be in close contact with the second inclined surface.

The tube connecting structure may further include a pressing portion protruding from the body portion and disposed between two first inclined surfaces facing each other.

The sealing member may be made of a rubber material or a ductile metal material.

The sealing member may have an annular shape and have a circular or trapezoidal cross-section.

According to another aspect of the present disclosure, in a method of connecting a tube for transporting a vehicle through an internal space at a pressure lower than atmospheric pressure, the method may include: disposing a plurality of tubes to be adjacent to each other, each of the plurality of tubes being provided with flanges having an extended diameter at each end; disposing a sealing member between the two flanges adjacent to each other; removing air from the tube; and connecting and fastening the plurality of tubes adjacent to each other by surrounding outer circumferential surfaces of the flanges adj acent to each other with a fastening member, wherein the sealing member is compressed and deformed by a pressure difference between an outside and an inside of the tube, while removing the air from the tube.

### [Advantageous Effects]

The tube connecting structure and the connection method thereof according to an embodiment of the present disclosure may enable easy connection and maintenance of tubes by connecting and fastening the tubes using a clamp type fastening structure. Accordingly, a manufacturing cost and a construction cost may be reduced compared to an existing flange connecting structure.

In addition, a sealing member that by itself forms an airtight structure due to a pressure difference between the inside and outside of a tube may be provided, thereby stably maintaining the inside of the tube in a low pressure or vacuum state.

In addition, a clamp structure with increased rigidity may be used to resist tensile and bending stresses generated at a tube connecting portion, thereby preventing safety accidents.

### [Description of Drawings]

FIG. 1 is a diagram illustrating a general transportation system.
FIG. 2 is a diagram illustrating that tubes for a transportation system are fastened by bolts and nuts which are an existing flange connecting structure.
FIG. 3 is a perspective view illustrating a tube connecting structure according to an embodiment of the disclosure.
FIG. 4 is a cut perspective view illustrating a tube connecting structure according to an embodiment of the disclosure.
FIG. 5 is a diagram illustrating a state in which a sealing member of a tube connecting structure according to an embodiment of the disclosure exhibits airtight performance due to a pressure difference.
FIG. 6 is a diagram illustrating a modified example of a sealing member of a tube connecting structure according to an embodiment of the disclosure.
FIG. 7 is a diagram illustrating a modified example of a fastening member of a tube connecting structure according to an embodiment of the disclosure.

### [Mode for Invention]

Hereinafter, embodiments of the present disclosure will be described in detail with reference to the accompanying drawings. The following embodiments are presented to fully convey the spirit of the present disclosure to those skilled in the art to which the present disclosure pertains, and are not limited to those shown herein, but may be embodied in other forms. The drawings may omit figures not pertinent to the description in order to clarify the present disclosure, and the sizes of configurations may be exaggerated for the purpose of illustration.

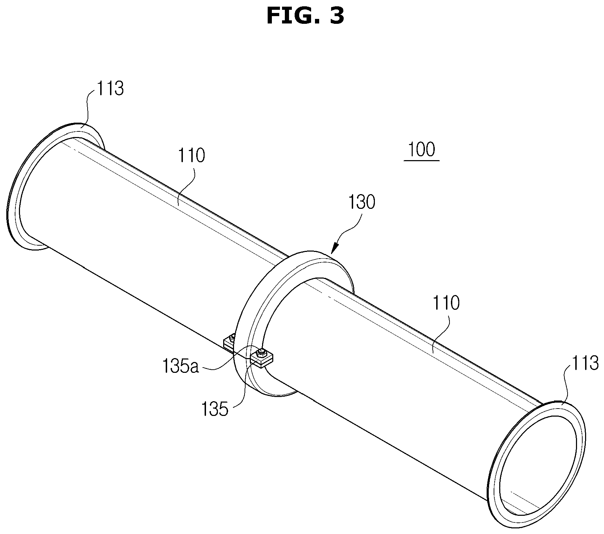

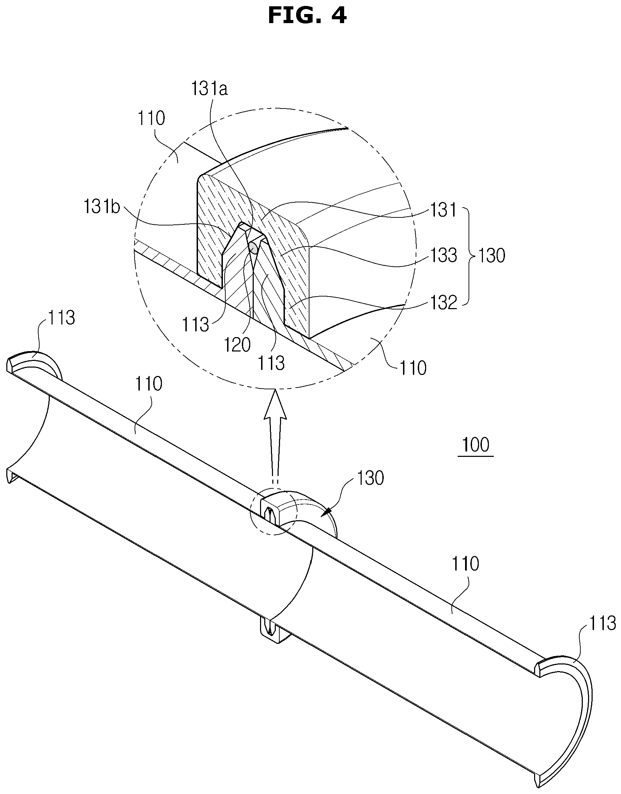

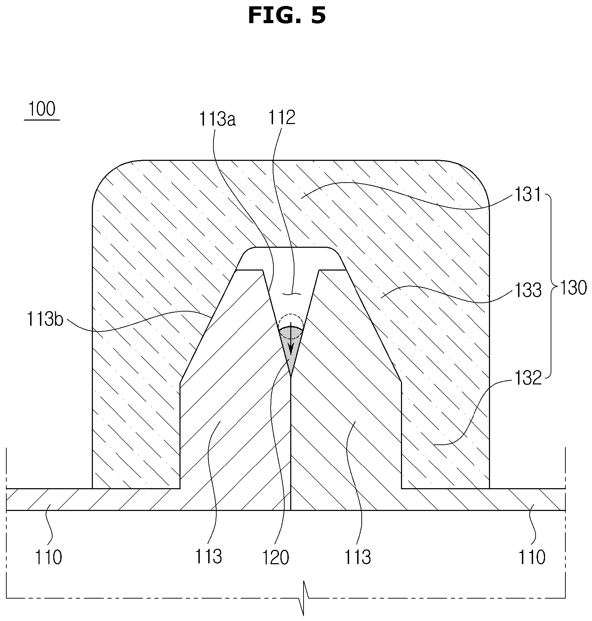

FIG. 3 is a perspective view illustrating a tube connecting structure according to an embodiment of the disclosure. FIG. 4 is a cut perspective view illustrating a tube connecting structure according to an embodiment of the disclosure. FIG. 5 is a diagram illustrating a state in which a sealing member of a tube connecting structure according to an embodiment of the disclosure exhibits airtight performance due to a pressure difference.

Referring now to FIG. 3 through FIG. 5, a tube connecting structure 100 according to an aspect of the present disclosure may include a plurality of tubes 110, fastening members 130 for connecting and fastening flanges 113 provided on the plurality of tubes 110, and a sealing member 120 provided between the flanges 113 adjacent to each other. The plurality of tubes 110 are continuously connected by the fastening members 130 and the sealing members 120, and the tube connecting structure 100 may be used as a track for transporting a vehicle (not shown) in a transportation system.

For example, the transportation system to which the tube connecting structure 100 according to an aspect of the present disclosure is applied may be used for a magnetic levitation system to reduce frictional resistance, which is one of the driving resistances. Magnetic levitation methods of the transportation system may include electromagnetic suspension or electrodynamic suspension which use attractive force or repulsive force between a vehicle and guide rails that function to propel, levitate, and guide the vehicle within a low-pressure tube. The electrodynamic suspension may include permanent magnet suspension using repulsive force between permanent magnets, and inductive suspension using the movement of a magnet attached to a vehicle to levitate by the repulsive force of a magnetic field caused by an induced current in a coil.

The tube 110 may have a cylindrical shape with a predetermined length and a hollow inside. In addition, the flanges 113 having an extended diameter may be provided at each end of the tube 110, respectively. In this case, the flanges 113 may be symmetrical to each other at both ends of the tube 110.

The flanges 113 may be fastened by the fastening member 130 in a state where the flange 113 is in contact with another flange 113 of the adjacent tube 110. The flanges 113 may be tapered outwardly in a radial direction. That is, the flanges 113 may have a conical shape with inclined surfaces including one side facing the adjacent tube 110 and another side opposite thereto.

More specifically, the flange 113 may have a first inclined surface 113a inclined forwardly toward the adjacent tube 110, and a second inclined surface 113b inclined rearwardly in an opposite direction to the first inclined surface 113a. Accordingly, the pair of flanges 113 formed at each end of one tube 110 are formed symmetrically with each other so that the first inclined surface 113a is formed forward and the second inclined surface 113b is formed rearward. Thus, when connecting the plurality of tubes 110, each tube 110 is connected so that the first inclined surfaces 113a of the flanges 113 face each other.

Meanwhile, when two adjacent tubes 110 are connected, a V-shaped groove 112 may be formed between the flange 113 and the flange 113 by two first inclined surfaces 113a facing each other. The sealing member 120 may be disposed in the V-shaped groove 112 to seal the inside of the tube 110.

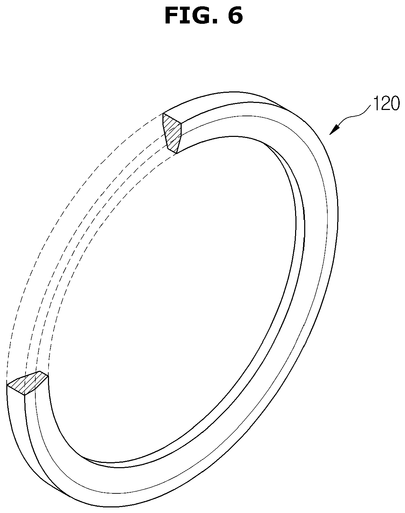

The sealing member 120 may be deformed by being compressed inwardly of the tube 110 by a pressure difference between the outside and inside of the tube 110. For example, when a vacuum is created inside the tube 110, the sealing member 120 may be deformed by itself into a compressed shape due to a pressure difference between the outside at atmospheric pressure and the inside of the tube 110 at low pressure, and be in close contact with the joint between two adjacent tubes 110 to seal the inside. The sealing member 120 may have an annular shape. Although the sealing member 120 is shown as having a circular cross-section in FIG. 6, the annular sealing member 120 may have a trapezoidal cross-section. In a case where the sealing member 120 is formed with a trapezoidal cross-section, two lateral sides between the two parallel sides may contact the first inclined surfaces 113a. Furthermore, although the cross-section of the sealing member 120 is shown and described as having a circular or trapezoidal shape, the present disclosure is not limited thereto. The sealing member 120 may have a polygonal cross-section, such as a rectangular, triangular, or the like.

Meanwhile, the sealing member 120 may be made of a rubber material or a ductile metal material so as to be deformable according to the pressure difference between the inside and outside of the tube 110. Here, the metal material may be copper, lead, or the like.

The fastening member 130 may be provided to wrap around two adjacent flanges 113 simultaneously. That is, the fastening member 130 may wrap the outer circumference of the two adjacent flanges 113. The fastening member 130 may be provided as a clamp that may be easily installed on the flanges 113 to connect and fasten the two flanges 113. For example, the fastening member 130 may be provided as a clamp that is divided into at least two pieces and joined together. As shown in the drawings, the fastening member 130 may be formed of two semicircular members, each end of which may be provided with a rotatable portion (not shown) at one end and a fixing portion 135 at the other end. In this case, the fixing portion 135 is fastened by a fixing bolt 135a and a fixing nut (not shown) so that the fastening member 130 forms an annular shape. Alternatively, the fastening member 130 may be formed with a fixing portion instead of a rotatable portion, so that each of the two ends are connected to form an annular shape.

More specifically, the fastening member 130 may include a body portion 131, a support portion 132 formed on both sides of the body portion 131, and a reinforcement portion 133 protruding from the support portion 132.

The body portion 131 may be provided on the outer sides of the two adjacent flanges 113. In other words, when the two adjacent flanges 113 are fastened by the fastening member 130, the body portion 131 may be positioned to be radially outward.

The support portion 132 may be extended in a downward direction from both sides of the body portion 131. Accordingly, the support portion 132 may be provided in pairs and be arranged to contact the rear of the flange 113. In other words, the support portion 132 may be formed to contact the rear of the second inclined surface 113b of the flange 113 and an outer circumference of the tube 110. The support portions 132 may be in close contact with the flange 113 and an outer surface of the tube 110 to withstand loads generated by the pressure difference between the inside and outside of the tube 110.

The reinforcement portion 133 may protrude from the support portion 132 toward the second inclined surface 113b3 In other words, the reinforcement portion 133 may protrude to have an inclined surface in close contact with the second inclined surface 113b. Accordingly, the reinforcement portion 133 may be configured to increase in thickness in the width direction of the fastening member 130 to improve durability and rigidity of the fastening member 130. Thus, the fastening member 130 may have sufficient rigidity to resist tensile and bending stresses that may occur at the connecting portion of the tube 110.

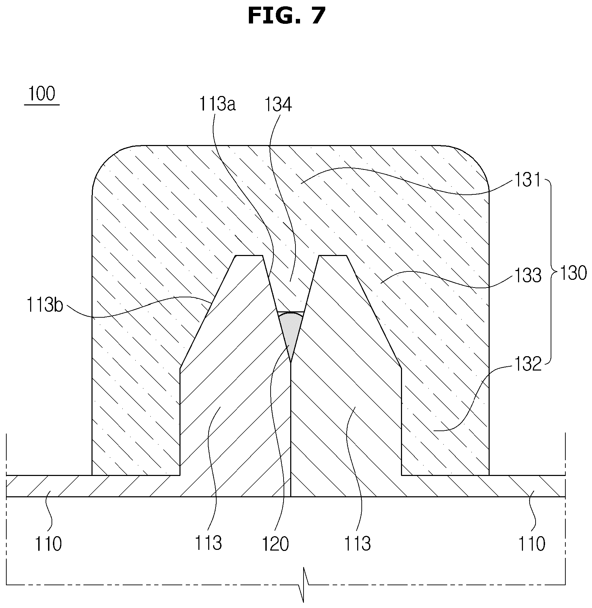

Although the fastening member 130 is shown and described as being formed to contact the outer surfaces of the two adjacent flanges 113, the fastening member 130 may also be provided to further enhance the rigidity of the fastening member 130 and prevent the sealing member 120 from falling off. A modified example of the fastening member 130 is shown in FIG. 7.

FIG. 7 is a diagram illustrating a modified example of a fastening member of a tube connecting structure according to an embodiment of the disclosure. Here, the same reference numerals as in the above indicate the same components.

Referring to FIG. 7, the tube connecting structure 100 according to the present embodiment may further include a pressing portion 134 protruding from the body portion 131 of the fastening member 130.

The pressing portion 134 may protrude from the body portion 131 so as to be disposed between two first inclined surfaces 113a facing each other. In other words, the pressing portion 134 may be inserted into the V-shaped groove 112 formed by the pair of first inclined surfaces 113a. The pressing portion 134 may be in surface contact with the first inclined surfaces 113a, and may serve to prevent deformation and detachment of the sealing member 120 by external loads.

The fastening member 130 is provided to have a sufficient rigidity to resist tensile and bending stresses that may occur at the connecting portion of the two tubes 110. For example, the fastening member 130 may be made of metal material or be molded to have a reinforced concrete structure.

In a connection method of the tube connecting structure 100, the plurality of tubes 110 are connected so that the sealing member 120 is disposed between adjacent tubes 110, and the pressure inside the tubes 110 is converted to a pressure level lower than atmospheric pressure. For example, in a case where a pressure outside the tubes is atmospheric pressure of 1 atm (approximately 101 kPa, 1 bar), the "lower pressure" refers to a pressure inside the tubes of less than 10 kPa (0.1 bar), which is close to vacuum. Examples of "lower pressure" may include 1 kPa (0.01 bar or 10 mbar), 500 Pa (5 mbar), 200 Pa (2 mbar), or 100 Pa (1 mbar). In addition, pressures lower than the above values may be included. Here, a pressure of approximately 100 Pa (1 mbar), which is 0.001 atm, is preferable, but any of the above lower pressures may be included. Thus, the sealing member 120 is deformed by being compressed inwardly of the tube 110 due to the pressure difference between the outside and inside of the tube 110.

Subsequently, by connecting and fastening the two adjacent flanges 113 using the fastening member 130, the vacuum inside the tube 110 may be completed.

Furthermore, in a case where any one of the plurality of tubes 110 connected and fastened is to be replaced for repair, the tube may be easily replaced through the fastening member 130 having a clamp structure. Accordingly, a construction cost (time for connecting a large number of bolts) as well as a manufacturing cost may be reduced compared to an existing flange connecting structure which requires disassembly and reassembly of bolts and nuts.

Although embodiments of the disclosure have been described with reference to the accompanying drawings, a person having ordinary skilled in the art will appreciate that other specific modifications may be easily made without departing from the technical spirit or essential features of the disclosure. Accordingly, the foregoing embodiments should be regarded as illustrative rather than limiting in all aspects.

## Claims

1. A tube connecting structure for transporting a vehicle through an internal space at a pressure lower than atmospheric pressure, the tube connecting structure comprising:
a plurality of tubes, each of which is provided with flanges having an extended diameter at each end;
a fastening member arranged to surround an outer circumferential surface of the flanges adjacent to each other; and
a sealing member provided between the flanges adjacent to each other to seal a gap between the plurality of tubes adjacent to each other,
wherein the sealing member is in close contact with the two flanges in an inward direction of the tube.

2. The tube connecting structure of claim 1, wherein the sealing member is compressed and deformed by itself by a pressure difference between an outside and an inside of the tube.

3. The tube connecting structure of claim 1, wherein each of the flanges is tapered outwardly in a radial direction, and includes a first inclined surface inclined forwardly toward the adjacent tube, and a second inclined surface inclined rearwardly in an opposite direction to the first inclined surface.

4. The tube connecting structure of claim 3, wherein the sealing member is provided in a V-shaped groove formed between two first inclined surfaces facing each other.

5. The tube connecting structure of claim 3, wherein the fastening member is provided as a clamp that is divided into at least two pieces and joined together, and
the fastening member comprises:
a body portion provided outside of the flanges adjacent to each other;
a support portion extending from both sides of the body portion and contacting a rear portion of the flange; and
a reinforcement portion protruding from the support portion and inclined so as to be in close contact with the second inclined surface.

6. The tube connecting structure of claim 5, further comprising:
a pressing portion protruding from the body portion and disposed between two first inclined surfaces facing each other.

7. The tube connecting structure of claim 1, wherein the sealing member is made of a rubber material or a ductile metal material.

8. The tube connecting structure of claim 1, wherein the sealing member has an annular shape and has a circular or trapezoidal cross-section.

9. A method of connecting a tube for transporting a vehicle through an internal space at a pressure lower than atmospheric pressure, the method comprising:
disposing a plurality of tubes to be adjacent to each other, each of the plurality of tubes being provided with flanges having an extended diameter at each end;
disposing a sealing member between the two flanges adjacent to each other;
removing air from each of the plurality of tubes; and
connecting and fastening the plurality of tubes adjacent to each other by surrounding outer circumferential surfaces of the flanges adjacent to each other with a fastening member,
wherein the sealing member is compressed and deformed by a pressure difference between an outside and an inside of the tube, while removing the air from the tube.
